(19) Europäisches Patentamt
European Patent Office
Office européen des brevets

(11) **EP 2 101 425 B1**

(12) **EUROPEAN PATENT SPECIFICATION**

(45) Date of publication and mention
of the grant of the patent:
**15.09.2010 Bulletin 2010/37**

(51) Int Cl.:
***H04B 10/148*** *(2006.01)*    ***H04B 10/158*** *(2006.01)*

(21) Application number: **09000565.3**

(22) Date of filing: **16.01.2009**

(54) **Optical receiving apparatus and method**

Optische Empfangsvorrichtung und -verfahren

Appareil et procédé de réception optique

(84) Designated Contracting States:
**DE FR GB**

(30) Priority: **10.03.2008 JP 2008060167**

(43) Date of publication of application:
**16.09.2009 Bulletin 2009/38**

(60) Divisional application:
**09172647.1 / 2 136 486**

(73) Proprietor: **Fujitsu Limited**
**Kawasaki-shi, Kanagawa 211-8588 (JP)**

(72) Inventors:
• **Tanimura, Takahito**
  **Kawasaki-shi,**
  **Kanagawa 211-8588 (JP)**
• **Hoshida, Takeshi**
  **Kawasaki-shi,**
  **Kanagawa 211-8588 (JP)**
• **Nakashima, Hisao**
  **Kawasaki-shi,**
  **Kanagawa 211-8588 (JP)**
• **Oda, Shoichiro**
  **Kawasaki-shi,**
  **Kanagawa 211-8588 (JP)**

(74) Representative: **HOFFMANN EITLE**
**Patent- und Rechtsanwälte**
**Arabellastrasse 4**
**81925 München (DE)**

(56) References cited:
• **SEIMETZ M ET AL: "Optical Systems With High-Order DPSK and Star QAM Modulation Based on Interferometric Direct Detection" JOURNAL OF LIGHTWAVE TECHNOLOGY, IEEE SERVICE CENTER, NEW YORK, NY, US, vol. 25, no. 6, 1 June 2007 (2007-06-01), pages 1515-1530, XP011185299 ISSN: 0733-8724**
• **XIANG LIU: "DSP-enhanced differential direct-detection for DQPSK and m-ary DPSK" 33RD EUROPEAN CONFERENCE AND EXHIBITION ON OPTICAL COMMUNICATION - ECOC 2007,, no. 33, 1 January 2007 (2007-01-01), XP009118549**

**Description**

BACKGROUND OF THE INVENTION

1. Field of the Invention

The present invention pertains to an optical receiving apparatus and method.

2. Description of the Related Art

In recent years, research and development of digital coherent reception for optical receiving apparatuses that receive optical signals has increased (see Xiang Liu, "DSP-Enhanced Differential Direct-Detection for DQPSK and m-ary DPSK", European Conference on Optical Communication (ECOC) 2007, 7.2.1). Digital coherent reception is a method of converting a physical characteristic of an optical signal such as intensity or phase into a digital signal with an analog/digital converter (ADC) and computing the digital signal in order to identify data of the optical signal.

Unlike conventional direct detection methods, digital coherent reception obtains both amplitude and phase of the optical electric field in the form of an electric signal, whereby having an advantage of compensating distortion caused by dispersion with use of an electrical flattening filter. Digital coherent reception enables a receiving apparatus to have high sensitivity and high noise-resistance due to coherent reception and digital signal processing.

Optical signal modulation schemes used with digital coherent reception include, for example, differential quadrature phase shift keying (DQPSK), quadrature amplitude modulation (QAM), and m-ary phase shift keying (MPSK).

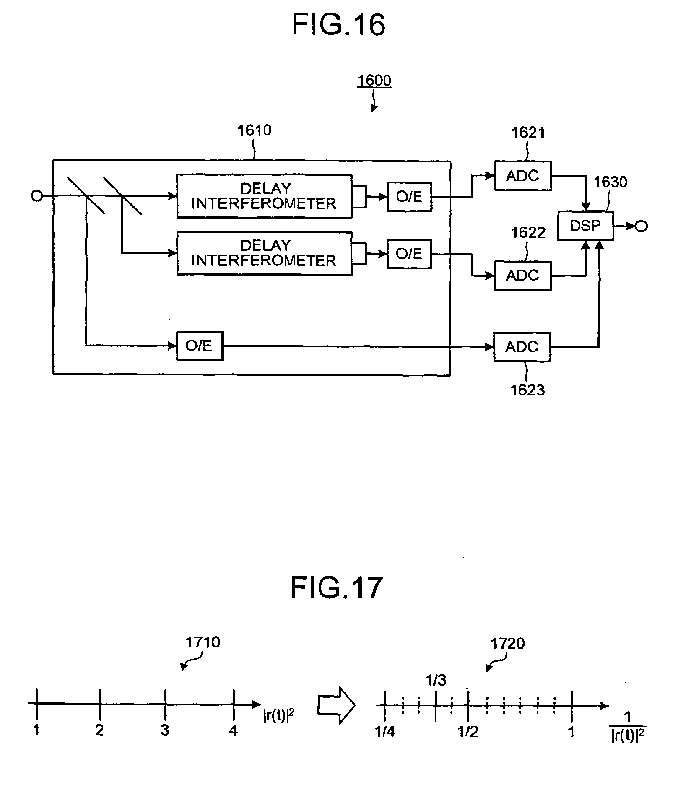

Fig. 16 is a functional diagram of a conventional optical receiving apparatus. An optical receiving apparatus 1600 depicted in Fig. 16 is an apparatus that performs digital coherent reception of an optical signal modulated according to DQPSK. A receiving unit 1610 outputs to an ADC 1621 and an ADC 1622, electrical signals respectively corresponding to the phase difference of I signals and the phase difference of Q signals.

The receiving unit 1610 further outputs, to an ADC 1623, an electrical signal corresponding to the intensity of the received optical signal. The ADCs 1621 to 1623 digitally convert the electrical signals from the receiving unit 1610 and output the converted signals to an identifying unit 1630. The identifying unit 1630 is, for example, a digital signal processor (DSP) or central processing unit (CPU).

The identifying unit 1630 performs computation based on the digital signals output from the ADCs 1621 to 1623 and identifies data carried by the optical signal received. For example, the identifying unit 1630 divides each phase of the digital signals output from the ADCs 1621 and 1622 by the intensity of the digital signal output from the ADC 1623, thereby reconstructing the electric field compensating degradation of the optical signal.

However, according to the conventional technique above, to perform the calculation to reconstruct the electric field of the optical signal requires division of a digital signal corresponding to the phase of the optical signal by a digital signal corresponding to the intensity of the optical signal. Since values of the digital signal digitally converted by the conventional ADC are evenly spaced apart, the values divided by a digital signal are unequally spaced.

Fig. 17 is a diagram of a characteristic of the ADC depicted in Fig. 16. The ADC 1623 performs digital conversion that discretizes analog information into four values. For example, as indicated by reference numeral 1710, the ADC 1623 discretizes the electrical signal $|r(t)|^2$ output from the receiving unit 1610 into evenly spaced values "1", "2", "3", and "4". Reference numeral 1720 indicates an inverse of the digital signal output from the ADC 1623.

When the ADC 1623 converts an electrical signal to "1", the inverse of the digital signal is "1". When the ADC 1623 converts the electrical signal to "2", the inverse of the digital signal is "1/2". When the ADC 1623 converts the electrical signal to "3", the inverse of the digital signal is "1/3". When the ADC 1623 converts the electrical signal to "4", the inverse of the digital signal is "1/4".

As described above, the inverse of evenly spaced digital signals is one of the unevenly spaced values "1/4", "1/3", "1/2", and "1". Consequently, calculation based on the values divided by digital signals makes accuracy inconsistent with respect to each of the digital signal values. In addition, since the calculation of electric field reconstruction refers to a signal of a previous bit, inaccuracy of part of a signal reduces the accuracy of the entire calculation.

One solution for this problem is, as indicated by dotted lines in Fig. 17, for the ADC 1623 to increase discrete values and density of the values. However, while discretization to four values requires two bits of a digital signal, discretization for obtaining four evenly spaced inverses requires 3.6 bits of a digital signal. Consequently, the calculation volume of the identifying unit 1630 increases and the cost for the ADC 1623 also increases.

Furthermore, according to the conventional technique above, in addition to the electrical signal indicative of optical signal phase, the electrical signal indicative of optical signal intensity must also be converted to a digital signal. Consequently, more ADCs are needed. Since an ADC is power-consuming and expensive, more ADCs mean increased power consumption and cost for the devices.

Seimetz M et al: "'Optical Systems With High-Order DPSK and Star OAM Modulation Based on Interferometric Direct Detection", Journal of Lightwave Technology, IEEE Service Center, New York, NY, US, vol. 25. no. 6, 1 June 2007 (2007-06-01), pages 1515-1530, XP011185299, ISSN: 0733-8724 refers to modulation formats for optical transmission for receivers with interferometric direct detection. A receiver structure is shown for converting phase modulation to intensity modulation using delay line interferometers. The outputs of the delay line interferometers are detected by balanced detectors and using two delay line interferometers with adequate phase shifts, inphase and quadrature components are obtained and every DPSK format can be detected.

## SUMMARY OF THE INVENTION

It is an object of the present invention to at least solve the above problems in the conventional technologies.

An optical receiving apparatus according to one aspect of the present invention includes a receiving unit that outputs a first electrical signal corresponding to a modulated phase of an optical signal received and a second electrical signal corresponding to an intensity of the optical signal; an analog dividing unit that divides the first electrical signal by the second electrical signal and outputs a third electrical signal; a digital converting unit that converts the third electrical signal to a digital signal; and an identifying unit that identifies data of the optical signal based on calculation using the digital signal.

An optical receiving method according to yet another aspect of the present invention includes outputting a first electrical signal corresponding to a modulated phase of an optical signal received and a second electrical signal corresponding to an intensity of the optical signal; dividing the first electrical signal by the second electrical signal to acquire a third electrical signal; converting the third electrical signal to a digital signal; and identifying data of the optical signal based on calculation using the digital signal.

The other objects, features, and advantages of the present invention are specifically set forth in or will become apparent from the following detailed description of the invention when read in conjunction with the accompanying drawings.

## BRIEF DESCRIPTION OF THE DRAWINGS

Fig. 1 is a functional diagram of an optical receiving apparatus according to a first embodiment;
Fig. 2 is a diagram of a waveform of an electrical signal at a point A depicted in Fig. 1;
Fig. 3 is a diagram of a waveform of an electrical signal at a point B depicted in Fig. 1;
Fig. 4 is a diagram of a waveform of an electrical signal at a point C depicted in Fig. 1;
Fig. 5 is a diagram of a waveform of an electrical signal at a point D depicted in Fig. 1;
Fig. 6 is a functional diagram of an identifying unit depicted in Fig. 1;
Fig. 7 is a diagram modeling an optical signal of equation 5 as a transmission path;
Fig. 8 is a graph of a phase reference in equations 6 and 7;
Fig. 9 is a diagram of one example of a receiving unit depicted in Fig. 1;
Fig. 10 is a functional diagram of the optical receiving apparatus according to a second embodiment;
Fig. 11 is a graph of input-output characteristics of an inverse square root unit depicted in Fig. 10;
Fig. 12 is a diagram of a waveform of an electrical signal at a point B depicted in Fig. 10;
Fig. 13 is a functional diagram of the optical receiving apparatus according to a third embodiment;
Fig. 14 is a functional diagram of the optical receiving apparatus according to a fourth embodiment;
Fig. 15 is a diagram of characteristics of a variable interval ADC depicted in Fig. 14;
Fig. 16 is a functional diagram of a conventional optical receiving apparatus; and
Fig. 17 is a diagram of a characteristic of an ADC depicted in Fig. 16.

## DETAILED DESCRIPTION OF THE PREFERRED EMBODIMENTS

Referring to the accompanying drawings, exemplary embodiments according to the present invention are explained in detail below.

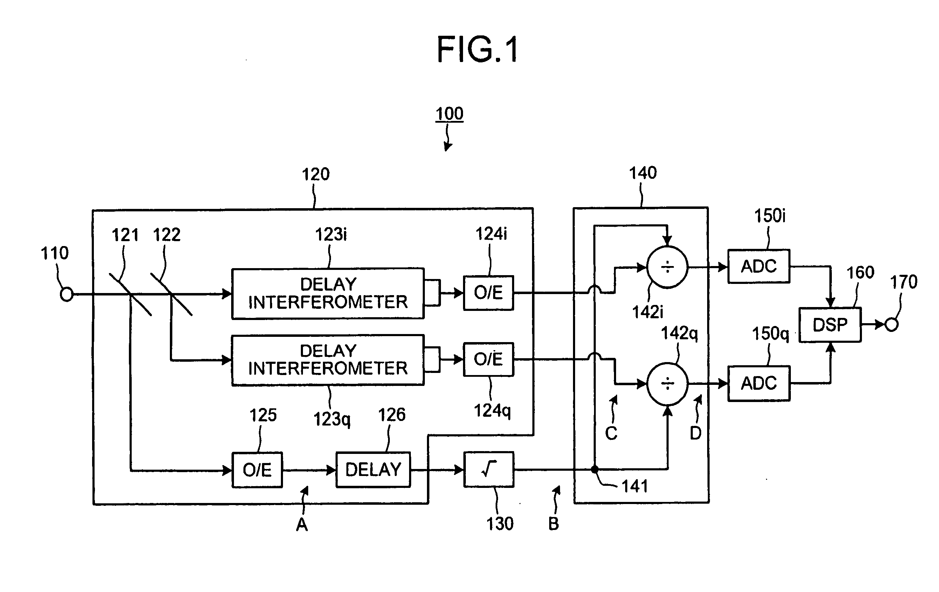

Fig. 1 is a functional diagram of an optical receiving apparatus according to a first embodiment. As depicted in Fig. 1, an optical receiving apparatus 100 includes an input unit 110, a receiving unit 120, a square root unit 130, a division unit 140, a first ADC 150i, a second ADC 150q, an identifying unit 160, and an output unit 170. The optical receiving apparatus 100 compensates optical signal degradation through a division operation using the intensity of the optical signal.

The input unit 110 receives optical signals from a source external to the optical receiving apparatus 100. The optical signals entering the input unit 110 are at least modulated according to a phase modulation scheme. For example, optical signals modulated according to DQPSK or QAM are input to the input unit 110. For explanation hereinafter, it is assumed that the optical signals are modulated according to DQPSK. The input unit 110 outputs the optical signals to the receiving unit 120.

The receiving unit 120 includes a first splitting unit 121, a second splitting unit 122, a delay interferometer 123i, a delay interferometer 123q, a first optoelectric converting unit 124i, a second optoelectric converting unit 124q, a third optoelectric converting unit 125, and a delay unit 126. The first splitting unit 121 splits an optical signal output from the input unit 110 and outputs the split optical signal to the second splitting unit 122 and the third optoelectric converting unit 125, respectively.

The second splitting unit 122, the delay interferometer 123i, the delay interferometer 123q, the first optoelectric converting unit 124i, and the second optoelectric converting unit 124q form a first receiving unit that outputs an electrical signal according to a phase of the optical signal output from the first splitting unit 121. The second splitting unit 122 splits the optical signal output from the first splitting unit 121 and outputs the split optical signal to the delay interferometer 123i and the delay interferometer 123q, respectively.

The delay interferometer 123i causes self delay interference and extracts an I-signal from the optical signal. The delay interferometer 123i splits the optical signal output from the second splitting unit 122 and delays, by one bit, one of the split optical signals to yield interference with the other optical signal. The delay interferometer 123i outputs a recombined optical signal to the first optoelectric converting unit 124i.

The delay interferometer 123q causes self delay interference and extracts a Q-signal from the optical signal. The delay interferometer 123q delays the optical signal output from the second splitting unit 122 by $\pi/2$ with respect to the optical signal entering the delay interferometer 123i, and splits the delayed optical signal. The delay interferometer 123q delays, by one bit, one of the split optical signals to yield interference with the other optical signal. The delay interferometer 123q outputs a recombined optical signal to the second optoelectric converting unit 124q.

The first optoelectric converting unit 124i converts the optical signal output from the delay interferometer 123i to an electrical signal and outputs the electrical signal to the dividing unit 140. The second optoelectric converting unit 124q converts the optical signal output from the delay interferometer 123q to an electrical signal and outputs the electrical signal to the dividing unit 140.

The third optoelectric converting unit 125 (a second receiving unit) receives the optical signal output from the first splitting unit 121 and outputs, to the delay unit 126 (delay), an electrical signal having an intensity corresponding to the intensity of the optical signal received. The first optoelectric converting unit 124i, the second optoelectric converting unit 124q, and the third optoelectric converting unit 125 are, for example, photo diodes (PD).

The delay unit 126 delays the electrical signal output from the third optoelectric converting unit 125 by a certain amount (1 bit) corresponding to the delay amount of the delay interference in the delay interferometers 123i and 123q. The delay unit 126 outputs the delayed signal to the square root unit 130 ($\sqrt{}$). The square root unit 130 outputs an electrical signal having an intensity corresponding to the square root of the intensity of the electrical signal output from the delay unit 126.

The dividing unit 140 is an analog dividing circuit that divides an electrical signal corresponding to the phase of the optical signal by an electrical signal corresponding to the intensity of the optical signal. The dividing unit 140 includes a third splitting unit 141, a first dividing circuit 142i, and a second dividing circuit 142q. The third splitting unit 141 outputs split electrical signals to the first dividing circuit 142i and the second dividing circuit 142q.

The first dividing circuit 142i divides the electrical signal output from the first optoelectric converting unit 124i by the intensity of the electrical signal output from the third splitting unit 141, and outputs the electrical signal obtained to the first ADC 150i. The second dividing circuit 142q divides the electrical signal output from the second optoelectric converting unit 124q by the intensity of the electrical signal output from the third splitting unit 141, and outputs the electrical signal obtained to the second ADC 150q.

A fast dividing circuit may be used for the first and second dividing circuits 142i and 142q. For instance, for the first and second dividing circuits 142i and 142q, a CMOS analog divider may be used (see Wilamowski, B.M., "VLSI analog multiplier/divider circuit", Industrial Electronics, 1998. Proceedings. ISIE '98. IEEE International Symposium on Volume 2, 7-10 July 1998, vol.2, pages 493-496; Digital Object Identifier: 10.1109/ISIE. 1998. 711588).

The first ADC 150i and the second ADC 150q are digital converters that digitally convert the electrical signal after division at the dividing unit 140. The first ADC 150i and the second ADC 150q digitally convert the electrical signals from the dividing unit 140, and output the digital signals obtained to the identifying unit 160.

The identifying unit 160 identifies data of the received optical signal by calculation based on the digital signals output from the first ADC 150i and the second ADC 150q. The identifying unit 160 is, for example, a CPU. The identifying unit 160 outputs the data identified to the output unit 170. The output unit 170 outputs the data output from the identifying unit 160 to an external destination.

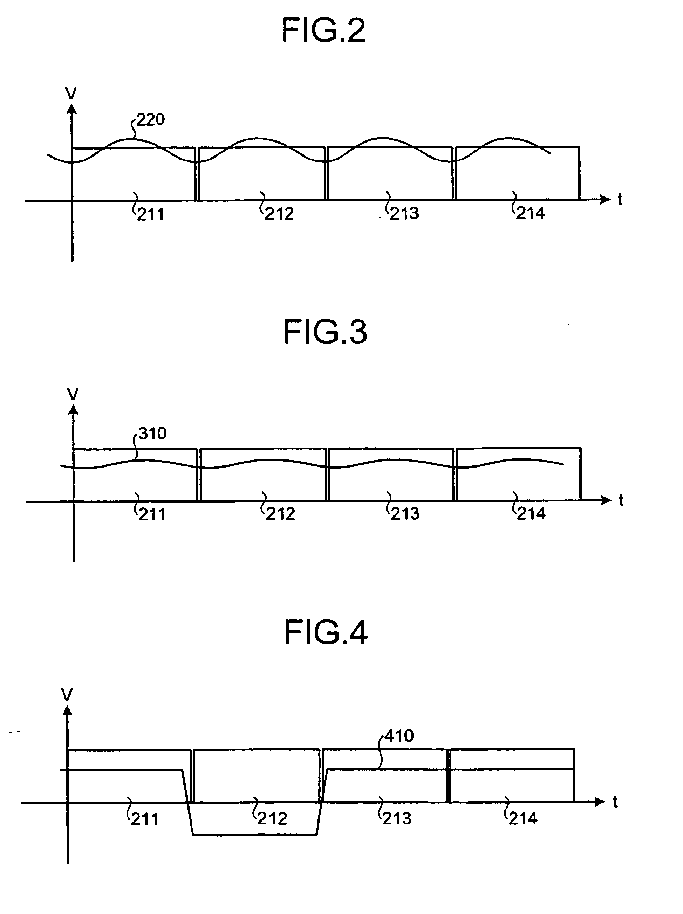

Fig. 2 is a diagram of a waveform of an electrical signal at a point A depicted in Fig. 1. An abscissa axis of Fig. 2 represents time (t). A longitudinal axis represents intensity (V). A waveform 220 belongs to the electrical signal (point A in Fig. 1) that is output from the third optoelectric converting unit 125 to the delay unit 126. Bits 211 to 214 represent a bit sequence included in the electrical signal.

If the third optoelectric converting unit 125 is a PD, the electrical signal from the third optoelectric converting unit 125 indicates a square of the intensity of the optical signal received by the optical receiving apparatus 100. Here, the intensity of the optical signal received by the optical receiving apparatus 100 changes with a period of the bit sequence. As a result, as indicated by the waveform 220, the intensity of the electrical signal output from the third optoelectric converting unit 125 changes with a period of the bit sequence of bits 211 to 214.

Fig. 3 is a diagram of a waveform of an electrical signal at a point B depicted in Fig. 1. In Figs. 3 to 5, parts identical to those depicted in Fig. 2 are given identical reference numerals and explanation thereof is omitted. A waveform 310 belongs to the electrical signal (point B in Fig. 1) output from the square root unit 130 to the third splitting unit 141. The electrical signal from the square root unit 130 indicates the intensity of the optical signal received. Therefore, as indicated by the waveform 310, the electrical signal from the square root unit 130 is obtained by averaging the electrical signal depicted in Fig. 2.

Fig. 4 is a diagram of a waveform of an electrical signal at a point C depicted in Fig. 1. A waveform 410 belongs to an electrical signal (point C in Fig. 1) output from the second optoelectric converting unit 124q to the second dividing circuit 142q. As indicated by the waveform 410, the intensity of the electrical signal from the second optoelectric converting unit 124q takes a positive or negative sign depending on a phase difference (0 or π) between the optical signal received and the optical signal one-bit ahead in a Q-aspect.

When the phase difference is 0, the intensity of the electrical signal output from the second optoelectric converting unit 124q takes a negative sign. When the phase difference is n, the intensity takes a positive sign. An electrical signal from the first optoelectric converting unit 124i to the first dividing unit 142i is similarly handled as the electrical signal having the waveform 410.

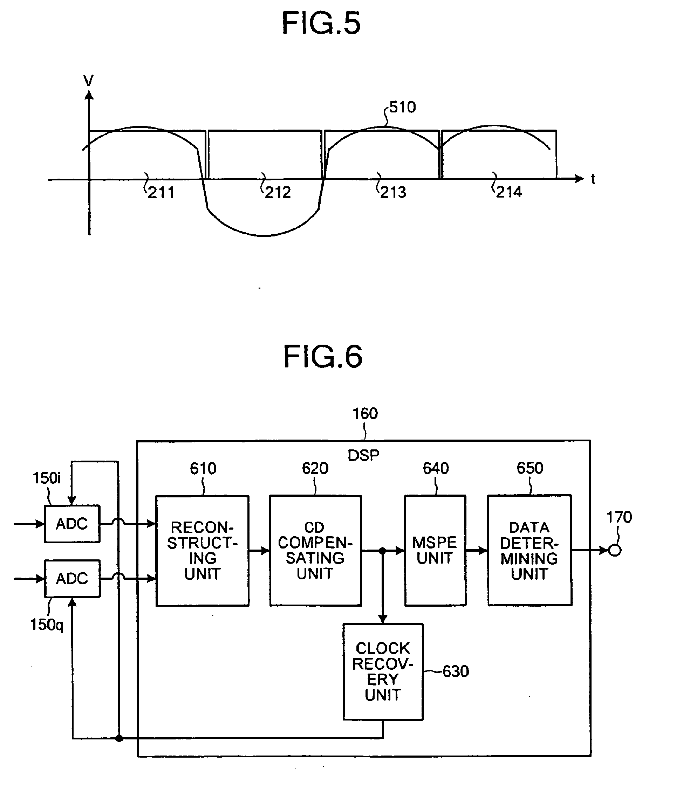

Fig. 5 is a diagram of a waveform of an electrical signal at a point D depicted in Fig. 1. A waveform 510 belongs to an electrical signal (point D in Fig. 1) output from the second dividing unit 142q to the second ADC 150q. The electrical signal from the second dividing unit 142q is obtained by dividing the phase difference by the intensity of a signal one bit ahead of the optical signal received. An electrical signal from the first dividing unit 142i to the first ADC 150i is similarly handled as the electrical signal having the waveform 510.

Fig. 6 is a functional diagram of the identifying unit depicted in Fig. 1. As depicted in Fig. 6, the identifying unit 160 includes a reconstructing unit 610, a chromatic dispersion (CD) compensating unit 620, a clock recovery unit 630, a multiple symbol phase estimation (MSPE) unit 640, and a data determining unit 650. The reconstructing unit 610 performs electric field reconstruction based on the digital signals output from the first ADC 150i and the second ADC 150q.

Electric field reconstruction is a process of compensating optical signal degradation through a division operation using the intensity of the optical signal. For each of the digital signals from the first ADC 150i and the second ADC 150q, the reconstructing unit 610 computes reconstructed complex electric field $r(n\tau)$ to perform the electric field reconstruction. The complex electric field $r(n\tau)$ is expressed by equation 1 below.

$$r(n\tau) = |r(n\tau)| \prod_{m=1}^{n} e^{j\Delta\phi(m\tau)} \qquad (1)$$

A phase difference $u(t)$ of the electrical signal output from the delay interferometer 123i or 123q with respect to the electrical signal one-bit ahead is expressed by equation 2 below.

$$u(t) = u_I(t) + j u_Q(t)$$
$$= r(t) r(t-\tau)* \qquad (2)$$

In equation 2, $u_I(t)$ is a real part and $u_Q(t)$ is an imaginary part of the phase difference $u(t)$ on the complex plane. Symbol "*" represents the complex conjugate.

According to equation 2, $e^{j\Delta\phi(t)}$ is expressed by equation 3 below.

$$e^{j\Delta\phi(t)} = r(t)r(t-\tau)^* / |r(t)r(t-\tau)^*|$$
$$= u(t) / |r(t)||r(t-\tau)| \qquad (3)$$

According to equation 3, $|r(t)|e^{j\Delta\phi(t)}$ is expressed by equation 4.

$$|r(t)|e^{j\Delta\phi(t)} = |r(t)|u(t)/(|r(t)||r(t-\tau)|)$$
$$= u(t)/|r(t-\tau)| \tag{4}$$

In equation 4, the phase difference u(t) is divided by the intensity of a signal one-bit ahead $|r(t-\tau)|$, and the divided values are multiplied one after another. Since the first ADC 150i and the second ADC 150q of the optical receiving apparatus 100 output a digital signal where u(t) is divided by $|r(t-\tau)|$, the reconstructing unit 610 multiplies digital signals output from the first ADC 150i and the second ADC 150q to compute the complex electric field $r(n\tau)$.

The reconstructing unit 610 outputs a digital signal of $r(n\tau)$ to the CD compensating unit 620. The CD compensating unit 620 dispersion compensates the digital signal output from the reconstructing unit 610. The CD compensating unit 620 outputs, to the clock recovery unit 630 and the MSPE unit 640, the digital signal after dispersion compensation.

The clock recovery unit 630 reproduces, based on the digital signal output from the CD compensating unit 620, a clock signal for the optical signal received. The clock recovery unit 630 outputs the clock signal to the first ADC 150i and the second ADC 150q. The first ADC 150i and the second ADC 150q use the clock signal as a sampling trigger for digital conversion.

The MSPE unit 640 performs MSPE based on the digital signal output from the CD compensating unit 620. The MSPE unit 640 outputs, to the data determining unit 650, the digital signal after the MSPE. The data determining unit 650, based on the digital signal output from the MSPE unit 640, identifies data of the optical signal received and outputs the data identified to the output unit 170.

Dispersion compensation by the CD compensating unit 620 is explained. The CD compensating unit 620 performs, for example, operations equivalent to finite impulse response (FIR) and a constant modulus algorithm (CMA) for the digital signal output from the reconstructing unit 610.

The received optical signal suffers from chromatic dispersion in a transmission path. An optical signal with chromatic dispersion is expressed by a model of equation 5 below.

$$r(t) = \mathrm{Re}\left\{ \sum_{k=0}^{N} c_k s(t-\tau_k) \cdot \exp(i\omega_0 t) \right\} \tag{5}$$

In equation 5, the optical signal is expressed by a superposition of N+1 waves (frequency of $\omega0$, $\omega1$, ..., $\omega N$). In equation 5, $\tau_k$ denotes an amount of delay of the k-th wave caused by the chromatic dispersion, and $c_k$ denotes a response of the k-th wave.

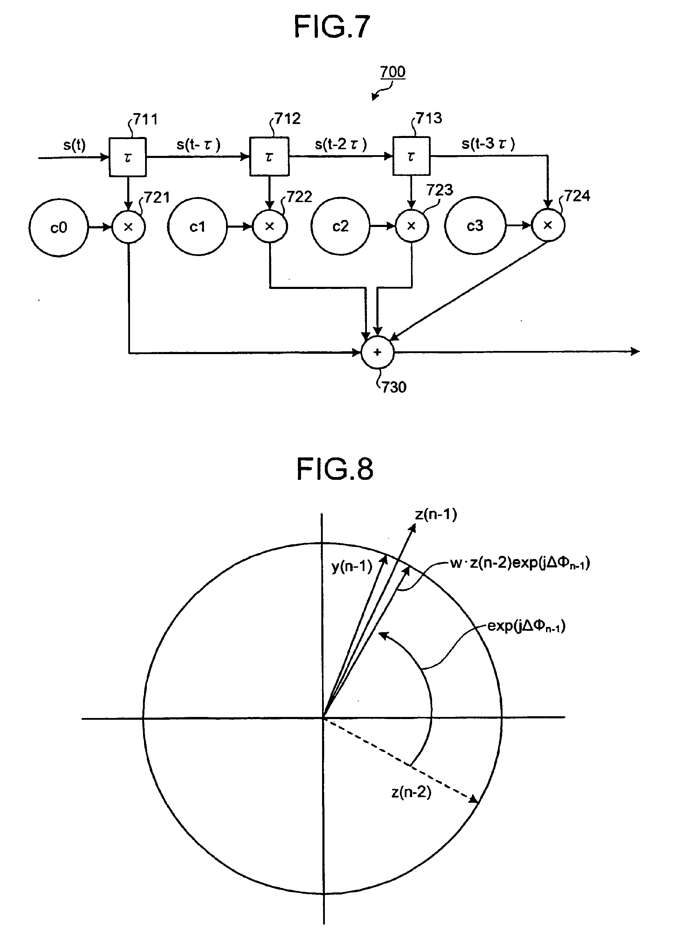

Fig. 7 is a diagram modeling the optical signal of equation 5 as a transmission path. The optical signal in equation 5 is depicted as a transmission path that is expressed by a tapped delay line model 700. The tapped delay line model 700 includes delay circuits 711 to 713, multiplying circuits 721 to 724, and an adding circuit 730.

The delay circuit 711 delays an input optical signal s(t) by $\tau$ and outputs the signal to the multiplying circuit 721 and the delay circuit 712. The multiplying circuit 721 multiplies the optical signal output from the delay circuit 711 by a tap coefficient c0 and outputs the multiplied signal to the adding circuit 730. The delay circuit 712 delays, by $\tau$, the optical signal s(t-$\tau$) output from the delay circuit 711, and outputs the delayed signal to the multiplying circuit 722 and the delay circuit 713.

The multiplying circuit 722 multiplies the optical signal output from the delay circuit 712 by a tap coefficient $c_1$ and outputs the multiplied signal to the adding circuit 730. The delay circuit 713 delays, by $\tau$, the signal s(t-2$\tau$) output from the delay circuit 712, and outputs the delayed signal to the multiplying circuit 723 and the multiplying circuit 724. The multiplying unit 723 multiplies the optical signal output from the delay circuit 713 by a tap coefficient $c_2$ and outputs the multiplied signal to the adding circuit 730.

The multiplying circuit 724 multiplies, by a tap coefficient $c_3$, the signal s(t-3$\tau$) output from the delay circuit 713 and outputs the multiplied signal to the adding circuit 730. The adding circuit 730 adds the optical signals from the multiplying circuits 721, 722, 723, and 724 and outputs the sum.

The tapped delay line model 700 is equivalent to a FIR filter. Therefore, the CD compensating unit 620 acts as a FIR filter (transverse filter) having a characteristic opposite to the tapped delay line model 700. In this way, chromatic dispersion of optical signals in a transmission path is compensated and a waveform of the signal is restored.

The MSPE conducted by the MSPE unit 640 is explained. Delay detection is needed to identify the signal after the differential phase modulation. According to a conventional delay detection method, a real part I(n) and an imaginary part Q(n) of a signal are obtained by equations (6) and (7) below, where y(n-1) is a signal one-bit ahead.

$$I(n) = Re\left[ e^{j\pi/4}y(n)y(n-1)^{\bullet} \right] \quad\quad (6)$$

$$Q(n) = Im\left[ e^{j\pi/4}y(n)y(n-1)^{\bullet} \right] \quad\quad (7)$$

In equations (6) and (7), y(n)y(n-1) denotes that a signal one-bit ahead is used as a phase reference for delay detection. The phase reference is a standard phase for comparison of phases. For delay detection, the MSPE unit 640 refines the phase reference y(n-1) to be a phase reference z(n-1) which is obtained by averaging multiple bits, thereby improving an optical signal noise ratio (OSNR).

Fig. 8 is a graph of the phase reference in equations (6) and (7). In Fig. 8, z(n-2) is a phase reference based on a signal two-bits ahead, exp(j△φn-1) is a value corresponding to an amount of modulation of a signal one-bit ahead. The phase reference z(n-1) is obtained with use of y(n-1), z(n-2) and $\exp(j\Delta\phi_{n-1})$ according to equation 8 below.

$$z(n-1)=y(n-1)+w\cdot z(n-2)\exp(j\Delta\phi_{n-1}) \quad\quad (8)$$

The signal one-bit ahead y(n-1) and the phase reference two bits ahead z(n-2) refined by exp(j△φn-1) are combined to yield the phase reference z(n-1). When △φ(n-q)=φ(n-q)-φ(n-q-1), equation 8 is rewritten as equation 9 below.

$$z(n-1) = y(n-1) + \sum_{p=1}^{N}\left\{ w^{P}\prod_{q=1}^{P}\left[ y(n-1-q)e^{j\Delta\phi(n-q)} \right] \right\} \quad\quad (9)$$

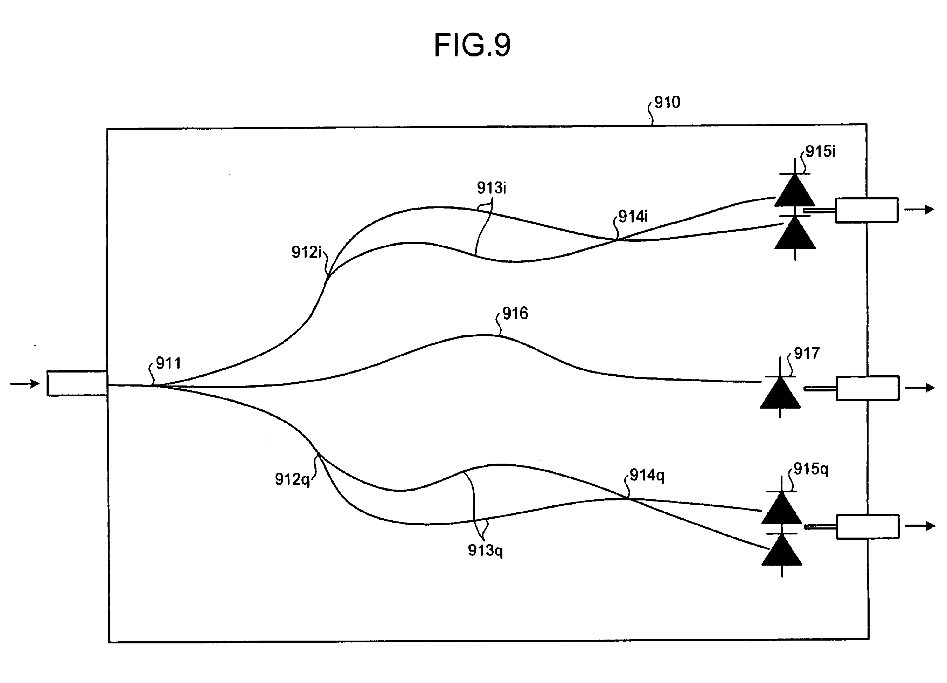

Fig. 9 is a diagram of one example of the receiving unit depicted in Fig. 1. The receiving unit 120 depicted in Fig. 1 may be built on a substrate 910. An optical waveguide on the substrate 910 includes a splitting unit 911, a splitting unit 912i, parallel waveguides 913i, a cross unit 914i, a splitting unit 912q, parallel waveguides 913q, a cross unit 914q, and a delay waveguide 916.

A pin photodiode 915i, a pin photodiode 915q, and a photodiode 917 are also placed on the substrate 910. The splitting unit 911 corresponds to the first splitting unit 121 and the second splitting unit 122 depicted in Fig. 1. The splitting unit 911 splits the optical signal output from the input unit 110 in three ways. The splitting unit 911 outputs the split signal to the splitting unit 912i, splitting unit 912q, and the delay waveguide 916.

The splitting unit 912i, the parallel waveguides 913i and the cross unit 914i correspond to the delay interferometer 123i. The splitting unit 912i splits the optical signal output from the splitting unit 911, and outputs the split signals to each waveguide of the parallel waveguides 913i. The length of each waveguide of the parallel waveguides 913i is adjusted so that the optical signal travelling through one waveguide is delayed by one bit relative to the optical signal travelling through the other waveguide.

The optical signals travelling through each waveguide of the parallel waveguides 913i are combined at the cross unit 914i and output to the pin photodiode 915i. The pin photodiode 915i corresponds to the first optoelectric converting unit 124i depicted in Fig. 1. The pin photodiode 915i receives the optical signal output from the cross unit 914i. The pin photodiode 915i outputs, to the dividing unit 140, an electrical signal according to the intensity of the input optical signal.

The splitting unit 912q, the parallel waveguides 913q and the cross unit 914q correspond to the delay interferometer 123q depicted in Fig. 1. The splitting unit 912q splits the optical signal output from the splitting unit 911, and outputs the split signals to each waveguide of the parallel waveguides 913q. The length of each waveguide of the parallel waveguides 913q is adjusted so that the optical signal travelling through one waveguide is delayed by one bit relative to the optical signal travelling through the other waveguide.

The optical signals travelling through the waveguides of the parallel waveguides 913q are combined at the cross unit 914q and output to the pin photodiode 915q. The pin photodiode 915q corresponds to the second optoelectric converting unit 124q depicted in Fig. 1. The pin photodiode 915q receives the optical signal output from the cross unit 914q. The pin photodiode 915q outputs, to the dividing unit 140, an electrical signal according to the intensity of the inbound optical signal.

The delay waveguide 916 includes a detour that delays an optical signal by one bit. The delay waveguide 916 delays the optical signal output from the splitting unit 911 by one bit and outputs the delayed signal to the photodiode 917. The photodiode 917 corresponds to the third optoelectric converting unit 125 depicted in Fig. 1. The photodiode 917 receives the optical signal output from the delay waveguide 916 and outputs to the dividing unit 140, an electrical signal according to the intensity of the optical signal received.

The optical receiving apparatus 100 performs division at a stage before the first ADC 150i and the second ADC 150q, thereby equalizing accuracy of values of digital signals even without an increase of bits of the digital signals.

Further, the optical receiving apparatus 100 performs division without converting electrical signals to digital signals, thereby reducing the number of ADCs. For example, the ADC 1623 in Fig. 16 can be omitted. Consequently, power saving and low cost for the device can be achieved.

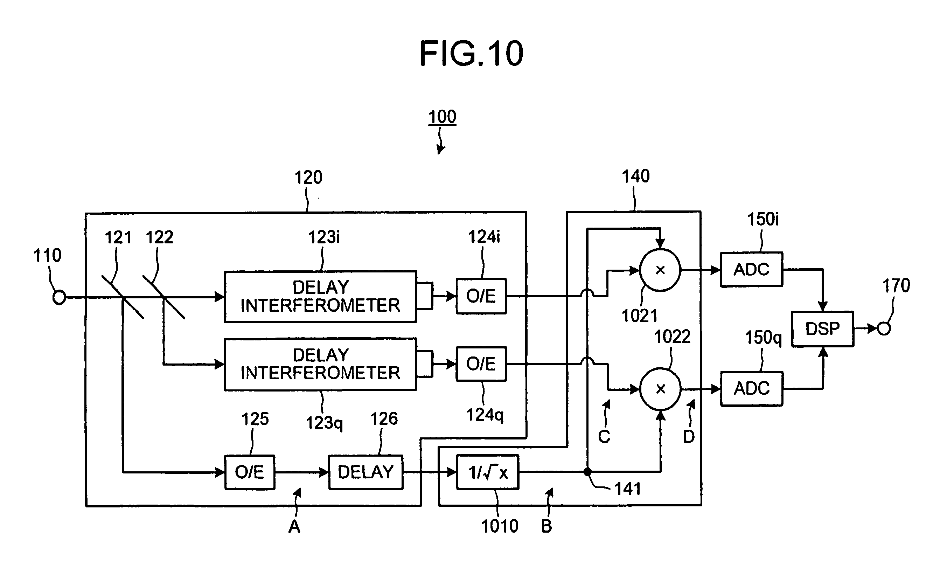

Fig. 10 is a functional diagram of the optical receiving apparatus according to a second embodiment. Parts identical to those depicted in Fig. 1 are given identical reference numerals, and explanation thereof is omitted. The optical receiving apparatus 100 includes an inverse square root unit 1010, a first multiplying unit 1021 and a second multiplying unit 1022 in place of the square root unit 130, the first dividing circuit 142i and the second dividing circuit 142q. The dividing unit 140 includes the inverse square root unit 1010, the third splitting unit 141, the first multiplying unit 1021, and the second multiplying unit 1022.

The delay unit 126 outputs the delayed electrical signal to the inverse square root unit 1010 ($1/\sqrt{x}$). The inverse square root unit 1010 outputs to the third splitting unit 141, an electrical signal having an intensity corresponding to a square root of an inverse of the intensity of the electrical signal output from the delay unit 126. The third splitting unit 141 splits the electrical signal output from the inverse square root unit 1010, and outputs the split electrical signals to the first multiplying unit 1021 and the second multiplying unit 1022.

The first multiplying unit 1021 multiplies the electrical signal output from the first optoelectric converting unit 124i by the intensity of the electrical signal output from the third splitting unit 141, and outputs the obtained electrical signal to the first ADC 150i. The second multiplying unit 1022 multiplies the electrical signal output from the second optoelectric converting unit 124q by the intensity of the electrical signal output from the third splitting unit 141, and outputs the obtained electrical signal to the second ADC 150q.

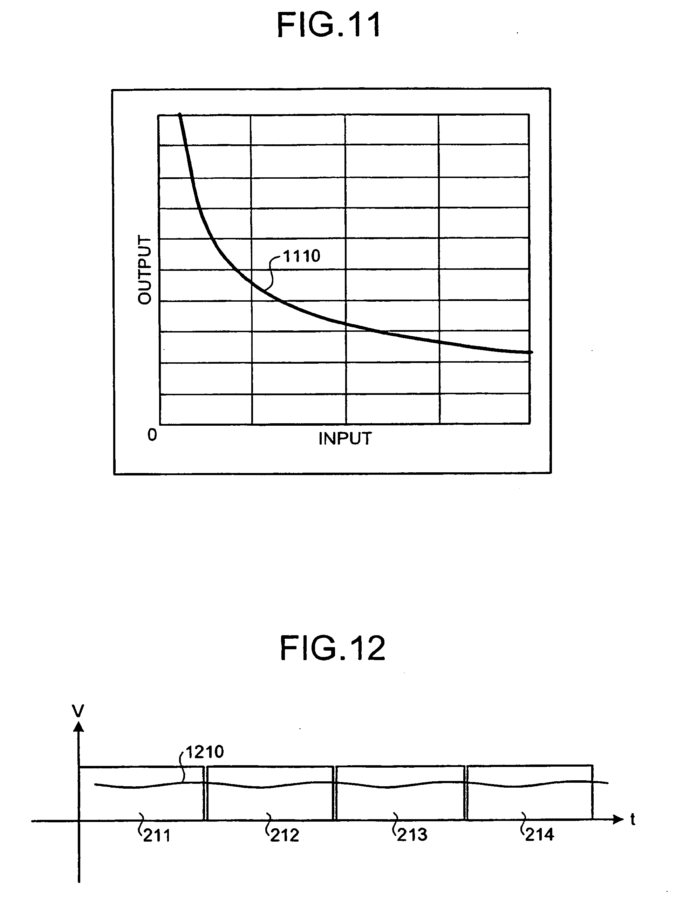

Fig. 11 is a graph of input-output characteristics of the inverse square root unit depicted in Fig. 10. In Fig. 11, the abscissa axis represents input to the inverse square root unit 1010, and the vertical axis represents output from the inverse square root unit 1010. A characterizing curve 1110 indicates the characteristics of the output of the inverse square root unit 1010 against the input. As indicated by the characterizing curve 1110, the inverse square root unit 1010 outputs an electrical signal corresponding to a square root of an inverse of intensity of the electrical signal input.

Fig. 12 is a diagram of a waveform of an electrical signal at a point B depicted in Fig. 10. Parts depicted in Fig. 12 identical to those depicted in Fig. 2 are given identical reference numerals and explanation thereof is omitted. A waveform 1210 is a waveform of the electrical signal (point B in Fig. 10) output from the inverse square root unit 1010 to the third splitting unit 141. The electrical signal from the inverse square root unit 1010 indicates a square root of the inverse of intensity of the input electrical signal.

Consequently, as indicated by the waveform 1210, the electrical signal from the inverse square root unit 1010 matches an inverse of the electrical signal depicted in Fig. 3. Since the electrical signals at the points A, C, and D depicted in Fig. 10 are identical to the electrical signals at the points A, C, and D depicted in Fig. 1, waveforms thereof are omitted here (see Figs. 2, 4 and 5).

As explained above, the optical receiving apparatus 100 of this embodiment includes the inverse square root unit 1010 that is an analog circuit and outputs an electrical signal corresponding to an inverse of the electrical signal representing intensity of the optical signal, and the first and second multiplying units 1021 and 1022 that multiply the electrical signal representing a phase of the optical signal by the electrical signal output from the inverse square root unit 1010, thereby forming a dividing unit therewith to obtain similar effects as the first embodiment.

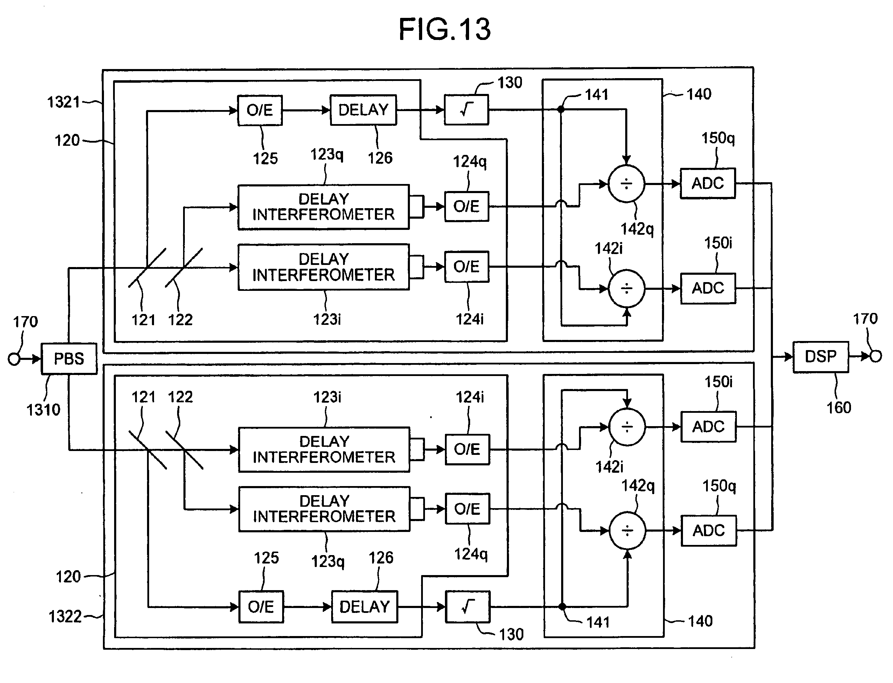

Fig. 13 is a functional diagram of the optical receiving apparatus according to a third embodiment. Parts identical to those depicted in Fig. 1 are given identical reference numerals and explanation thereof is omitted. As depicted in Fig. 13, an optical receiving apparatus 100 includes the input unit 110, a polarization beam splitter (PBS) 1310, a first polarization processing unit 1321, a second polarization processing unit 1322, the identifying unit 160, and the output unit 170.

An optical signal input to the input unit 110 is at least modulated according to a phase modulation method and is a polarization multiplex optical signal in which variously polarized optical signals are multiplexed. The input unit 110 outputs the optical signal to the PBS 1310.

The PBS 1310 splits the optical signal output from the input unit 110 according to polarization, and outputs the split signals to the first polarization processing unit 1321 and the second polarization processing unit 1322. The first polarization processing unit 1321 and the second polarization processing unit 1322 each include the receiving unit 120, the square root unit 130, the dividing unit 140, the first ADC 150i, and the second ADC 150q (see Fig. 1).

The first splitting unit 121 of the first polarization processing unit 1321 splits the optical signal output from the PBS 1310, and outputs the split optical signals to the second splitting unit 122 and the third optoelectric converting unit 125 of the first polarization processing unit 1321. The first splitting unit 121 of the second polarization processing unit 1321 splits the optical signal output from the PBS 1310, and outputs the split optical signals to the second splitting unit 122 and the third optoelectric converting unit 125 of the second polarization processing unit 1322.

The identifying unit 160 identifies data of the received optical signal by calculation based on a digital signal output from the first ADC 150i of the first polarization processing unit 1321, a digital signal output from the second ADC 150q of the first polarization processing unit 1321, a digital signal output from the first ADC 150i of the second polarization processing unit 1322, and a digital signal output from the second ADC 150q of the second polarization processing unit 1322.

The reconstructing unit 610 of the identifying unit 160 (see Fig. 6) reconstructs an electric field to compensate a mixture of polarization states in addition to the electric field reconstruction explained in Fig. 6. A mixture of polarization states appears in the optical signal received travelling through a transmission path. The optical signal passing the transmission path and having a mixture of polarization can be modeled by equation 10 below.

$$\begin{bmatrix} Ex\_Rx \\ Ey\_Rx \end{bmatrix} = \begin{bmatrix} v_1 & v_2 \\ -v_2^* & v_1^* \end{bmatrix} \begin{bmatrix} e^{j\omega\tau/2} & 0 \\ 0 & e^{-j\omega\tau/2} \end{bmatrix} \begin{bmatrix} u_1 & u_2 \\ -u_2^* & u_1^* \end{bmatrix} e^{-j\omega\tau_0} e^{-j\omega^2\beta_2 z/2} \begin{bmatrix} Ex\_Tx \\ Ey\_Tx \end{bmatrix} \quad (10)$$

Matrices $\begin{pmatrix} v_1 & v_2 \\ -v_2^* & v_1^* \end{pmatrix}$ and $\begin{pmatrix} u_1 & u_2 \\ -u_2^* & u_1^* \end{pmatrix}$ at the right side of equation 10 denote a polarization state of the optical signal on the transmission path. A matrix $\begin{pmatrix} e^{j\omega\tau/2} & 0 \\ 0 & e^{-j\omega\tau/2} \end{pmatrix}$ at the right side of equation 10 denotes polarization mode dispersion (PMD) on the transmission path.

An element $e^{-j\omega^2\beta_2 z/2}$ denotes chromatic dispersion on the transmission path, and $e^{-j\omega\tau_0}$ denotes an amount of delay on the transmission path. The electric field reconstruction unit 610 performs an inverse operation of equation 10 and separates polarization components of the signal, thereby compensating the mixture of polarization states occurring on the transmission path.

The optical receiving apparatus 100 according to this embodiment obtains effects similar to the first embodiment and identifies data included in the polarization multiplex optical signal more precisely by compensating a mixture of polarization states by the electric field reconstructed by the reconstructing unit 610.

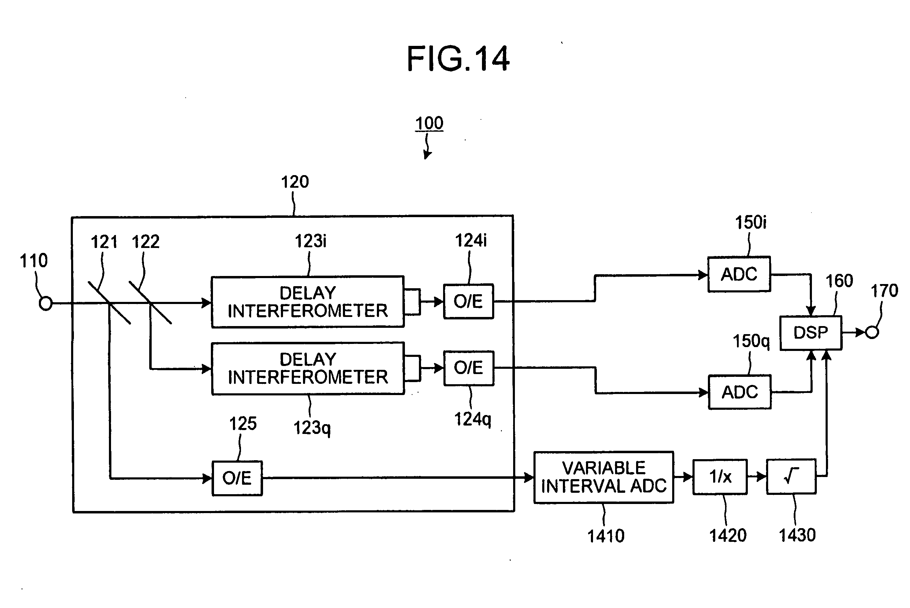

Fig. 14 is a functional diagram of the optical receiving apparatus according to a fourth embodiment. Parts identical to those depicted in Fig. 1 are given identical reference numerals and explanation thereof is omitted. An optical receiving apparatus 100 according to the fourth embodiment includes the input unit 110, the receiving unit 120, a variable interval ADC 1410, an inverse unit 1420, a square root unit 1430, the first ADC 150i, the second ADC 150q, the identifying unit 160, and the output unit 170.

The receiving unit 120 here has a configuration similar to the receiving unit 120 depicted in Fig. 1 less the delay unit 126. The first optoelectric converting unit 124i outputs a converted electrical signal to the first ADC 150i. The second optoelectric converting unit 124q outputs a converted electrical signal to the second ADC 150q. The third optoelectric converting unit 125 outputs a converted electrical signal to the variable interval ADC 1410.

The variable interval ADC 1410 is a variable interval digital converter that performs a digital conversion to convert the electrical signal output from the third optoelectric converting unit 125 to discrete values with irregular intervals. Values with irregular intervals are values whose inverses have square roots aligned at constant intervals. The variable interval ADC 1410 outputs the digital signal to the inverse unit 1420.

The inverse unit 1420 outputs an inverse of the digital signal output from the variable interval ADC 1410 to the square root unit 1430. The square root unit 1430 outputs a square root of the digital signal output from the inverse unit 1420 to the identifying unit 160. Thus, the digital signal from the variable interval ADC 1410 is converted to the inverse at the inverse unit 1420 and to the square root thereof at the square root unit 1430. The digital signal input to the identifying unit 160 is a digital signal discrete with even intervals.

The identifying unit 160 identifies data of the received optical signal based on calculation using digital signals output from the first ADC 150i, the second ADC 150q, and the inverse unit 1420. The identifying unit 610 computes the complex electric field $r(n\tau)$ of equation 1. The digital signal from the inverse unit 1420 has a value corresponding to $1/|r$

(t-τ)| of equation 3.

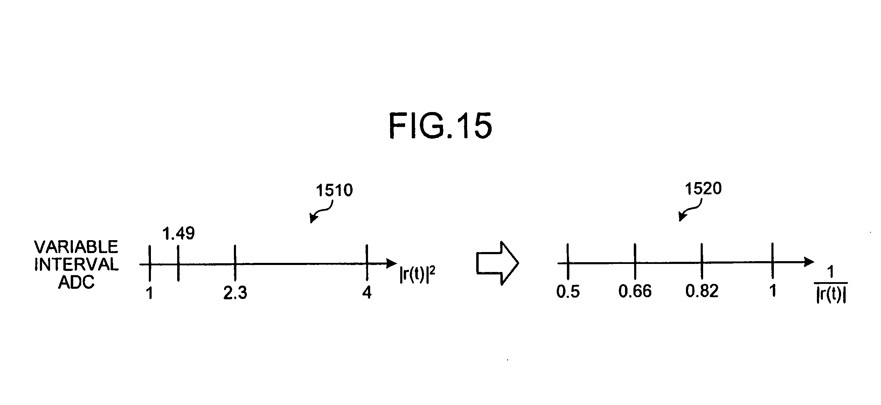

Fig. 15 is a diagram of characteristics of the variable interval ADC depicted in Fig. 14. Here, the variable interval ADC 1410 performs discretization of an electrical signal to four values. Reference numeral 1510 indicates four discrete values generated by the variable interval ADC 1410. As indicated by reference numeral 1510, the variable interval ADC 1410 performs discretization of the electrical signal $|r(t)|^2$ output from the third optoelectric converting unit 125 to "1", "1.49", "2.3", and "4".

Reference numeral 1520 indicates values of the digital signal output from the square root unit 1430. When the variable interval ADC 1410 converts the electrical signal to "1", the square root unit 1430 outputs "1". When the variable interval ADC 1410 converts the electrical signal to "1.49", the square root unit 1430 outputs "0.82". When the variable interval ADC 1410 converts the electrical signal to "2.3", the square root unit 1430 outputs "0.66".

When the variable interval ADC 1410 converts the electrical signal to "4", the square root unit 1430 outputs "0.5". Namely, the square root unit 1430 outputs one of equally spaced discrete values "0.5", "0.66", "0.82", and "1". In this way, the square root unit 1430 outputs equally spaced discrete values of the digital signals to the identifying unit 160.

The optical receiving apparatus 100 according to the fourth embodiment performs discretization of an electrical signal corresponding to the intensity of the optical signal with use of the variable interval ADC 1410, and outputs digital signals from the square root unit 130 to the identifying unit 160 so that the values of the digital signals are evenly spaced. As a result, bits of digital signals need not be increased to adjust the accuracy of values of digital signals at the identifying unit 160 to be uniform. Therefore, accuracy of calculation for electrical field reconstruction is improved while the calculation volume s does not increase at the identifying unit 160.

As explained above, due to a division operation upstream from a digital converter, accuracy of each value of digital signals does not vary even without an increase of the bits of the digital signals. In the explanation above, the optical signal is modulated according to the DQPSK scheme; however, any phase modulation scheme can be applied to the optical signal.

For example, when the optical receiving apparatus 100 receives an optical signal modulated according to the differential phase shift keying (DPSK) scheme, the delay interferometer 123q, the second optoelectric converting unit 124q, the second dividing unit 142q and the second ADC 150q may be omitted in Fig. 1.

Although the invention has been described with respect to a specific embodiment for a complete and clear disclosure, the appended claims are not to be thus limited but are to be construed as covering all modifications and alternative constructions that may occur to one skilled in the art which fall within the scope of the claims.

**Claims**

**1.** An optical receiving apparatus comprising:

a receiving unit (120) that outputs a first electrical signal corresponding to a modulated phase of an optical signal received and a second electrical signal corresponding to an intensity of the optical signal;
a dividing unit (140) that divides the first electrical signal by the second electrical signal and outputs a third electrical signal;
a digital converting unit (150i, 150q) that converts the third electrical signal to a digital signal; and
an identifying unit (160) that identifies data of the optical signal based on calculation using the digital signal, **characterised in that** the dividing unit (140) in an analog dividing unit.

**2.** The optical receiving apparatus according to claim 1, wherein
the identifying unit (160) multiplies digital signals output from the digital converting unit (150i, 150q) to perform electric field reconstruction for the optical signal, and identifies the data of the optical signal based on a result of the electric field reconstruction.

**3.** The optical receiving apparatus according to claim 1, further comprising
a square root unit (130) that outputs a fourth electrical signal corresponding to a square root of the first electrical signal, wherein
the analog dividing unit (150i, 150q) divides the fourth electrical signal by the second electrical signal.

**4.** The optical receiving apparatus according to claim 1, wherein
the receiving unit (120) includes:

a splitting unit (121) that splits the optical signal and outputs a first optical signal and a second optical signal;
a first receiving unit that receives the first optical signal, and outputs the first electrical signal; and

a second receiving unit that receives the second optical signal, and outputs the second electrical signal.

5. The optical receiving apparatus according to claim 4, wherein
the first receiving unit includes:

a delay interferometer (123i; 123q) that causes self delay interference of a given amount to the first optical signal and outputs the first optical signal subsequently; and
an optoelectric converting unit (124i; 124q) that outputs the first electrical signal corresponding to the first optical signal delayed by the delay interferometer.

6. The optical receiving apparatus according to claim 5, wherein
the second receiving unit includes a delay unit (126) that delays the second electrical signal by the given amount.

7. The optical receiving apparatus according to claim 1, wherein
the analog dividing unit (140) includes:

an analog inverse circuit that outputs a fifth electrical signal corresponding to an inverse of the second electrical signal; and
an analog multiplying circuit that multiplies the first electrical signal by the fifth electrical signal.

8. An optical receiving method comprising:

outputting a first electrical signal corresponding to a modulated phase of an optical signal received and a second electrical signal corresponding to an intensity of the optical signal;
dividing the first electrical signal by the second electrical signal to acquire a third electrical signal;
converting the third electrical signal to a digital signal; and
identifying data of the optical signal based on calculation using the digital signal,
**characterised in that** the dividing step is carried out in the analog domain.

**Patentansprüche**

1. Optische Empfangsvorrichtung, umfassend:

eine Empfangseinheit (120), die ein erstes elektrisches Signal ausgibt, das einer modulierten Phase eines empfangenen optischen Signals entspricht und ein zweites elektrisches Signal, das einer Intensität des optischen Signals entspricht;
eine Teilungseinheit (140), die das erste elektrische Signal durch das zweite elektrische Signal teilt und ein drittes elektrisches Signal ausgibt;
eine Digital-Umwandlungseinheit (115i, 115q), die das dritte elektrische Signal in ein digitales Signal umwandelt; und
eine Identifizierungseinheit (160), die Daten des optischen Signals identifiziert, basierend auf Berechnungen unter Verwendung des digitalen Signals,
**dadurch gekennzeichnet, dass** die Teilungseinheit (140) eine analoge Teilungseinheit ist.

2. Optische Empfangsvorrichtung nach Anspruch 1, wobei
die Identifizierungseinheit (160) Digitalsignalausgaben der Digital-Umwandlungseinheit (150i, 150q) multipliziert, um eine elektrische Feldrekonstruktion für das optische Signal auszuführen, und die Daten des optischen Signals identifiziert basierend auf dem Ergebnis der elektrischen Feldrekonstruktion.

3. Optische Empfangsvorrichtung nach Anspruch 1, ferner umfassend
eine Quadratwurzeleinheit (130), die ein viertes elektrisches Signal ausgibt entsprechend einer Quadratwurzel des ersten elektrischen Signals, wobei
die Analogteilungseinheit (150i, 150q) das vierte elektrische Signal durch das zweite elektrische Signal teilt.

4. Optische Empfangsvorrichtung nach Anspruch 1, wobei
die Empfangseinheit (120) beinhaltet:

eine Aufspaltungseinheit (121), die das optische Signal aufspaltet und ein erstes optisches Signal und ein zweites optisches Signal ausgibt;

eine erste Empfangseinheit, die das erste optische Signal empfängt und das erste elektrische Signal ausgibt; und

eine zweite Empfangseinheit, die ein zweites optisches Signal empfängt und das zweite elektrische Signal ausgibt.

5.  Optische Empfangseinheit nach Anspruch 4, wobei
    die erste Empfangseinheit beinhaltet:

    ein Verzögerungs-Interferometer (123i; 123q), das Selbstverzögerungsinterferenz eines gegebenen wertes auf das erste optische Signal bewirkt und das erste optische Signal anschließend ausgibt; und
    eine opto-elektrische Umwandlungseinheit (124i; 124q), die das erste elektrische Signal ausgibt, das dem ersten optischen Signal entspricht, das durch das Verzögerungs-Interferometer verzögert ist.

6.  Optische Empfangsvorrichtung nach Anspruch 5, wobei
    die zweite Empfangseinheit eine Verzögerungseinheit (126) beinhaltet, die das zweite elektrische Signal verzögert mit dem gegebenen Wert.

7.  Optische Empfangsvorrichtung nach 1, wobei
    die Analogteilungseinheit (140) beinhaltet:

    eine Analoginversschaltung, die ein fünftes elektrisches Signal entsprechend einer Inversen des zweiten elektrischen Signals ausgibt; und
    eine Analog-Multiplizierschaltung, die das erste elektrische Signal mit dem fünften elektrischen Signal multipliziert.

8.  Optisches Empfangsverfahren, umfassend:

    Ausgeben eines ersten elektrischen Signals entsprechend einer modulierten Phase eines empfangenen optischen Signals und ein zweites elektrisches Signal entsprechend einer Intensität des optischen Signals;
    Teilen des ersten elektrischen Signals durch das zweite elektrische Signal, um ein drittes elektrisches Signal zu erhalten;
    Umwandeln des dritten elektrischen Signals in ein digitales Signal; und
    Identifizieren von Daten des optischen Signals basierend auf Berechnungen unter Verwendung des digitalen Signals,
    **dadurch gekennzeichnet, dass** der Teilungsschritt in dem anlogen Bereich ausgeführt wird.

**Revendications**

1.  Appareil de réception optique comprenant :

    une unité de réception (120) qui sort un premier signal électrique correspondant à une phase modulée d'un signal optique reçu et un deuxième signal électrique correspondant à une intensité du signal optique ;
    une unité de division (140) qui divise le premier signal électrique par le deuxième signal électrique et sort un troisième signal électrique ;
    une unité de conversion numérique (150i, 150q) qui convertit le troisième signal électrique en un signal numérique ; et
    une unité d'identification (160) qui identifie des données du signal optique sur la base d'un calcul utilisant le signal numérique,
    **caractérisé en ce que** l'unité de division (140) est une unité de division analogique.

2.  Appareil de réception optique selon la revendication 1, dans lequel
    l'unité d'identification (160) multiplie des signaux numériques sortis de l'unité de conversion numérique (150i, 150q) pour effectuer une reconstruction de champ électrique pour le signal optique, et identifie les données du signal optique sur la base d'un résultat de la reconstruction de champ électrique.

3.  Appareil de réception optique selon la revendication 1, comprenant en outre

une unité de racine carrée (130) qui sort un quatrième signal électrique correspondant à une racine carrée du premier signal électrique, dans lequel

l'unité de division analogique (150i, 150q) divise le quatrième signal électrique par le deuxième signal électrique.

**4.** Appareil de réception optique selon la revendication 1, dans lequel
l'unité de réception (120) comprend :

une unité de séparation (121) qui sépare le signal optique et sort un premier signal optique et un deuxième signal optique ;
une première unité de réception qui reçoit le premier signal optique, et sort le premier signal électrique ; et
une seconde unité de réception qui reçoit le deuxième signal optique, et sort le deuxième signal électrique.

**5.** Appareil de réception optique selon la revendication 4, dans lequel
la première unité de réception comprend :

un interféromètre à retard (123i ; 123q) qui provoque une auto-interférence de retard d'une quantité donnée sur le premier signal optique et sort par la suite le premier signal optique ensuite ; et
une unité de conversion optoélectrique (124i ; 124q) qui sort le premier signal électrique correspondant au premier signal optique retardé par l'interféromètre à retard.

**6.** Appareil de réception optique selon la revendication 5, dans lequel
la seconde unité de réception comprend une unité à retard (126) qui retarde le deuxième signal électrique d'une quantité donnée.

**7.** Appareil de réception optique selon la revendication 1, dans lequel
l'unité de division analogique (140) comprend :

un circuit d'inversion analogique qui sort un cinquième signal électrique correspondant à une inversion du deuxième signal électrique ; et
un circuit de multiplication analogique qui multiplie le premier signal électrique par le cinquième signal électrique.

**8.** Procédé de réception optique comprenant :

la sortie d'un premier signal électrique correspondant à une phase modulée d'un signal optique reçu et un deuxième signal électrique correspondant à une intensité du signal optique ;
la division du premier signal électrique par le deuxième signal électrique pour obtenir un troisième signal électrique ;
la conversion du troisième signal électrique en un signal numérique ; et
l'identification de données du signal optique sur la base d'un calcul utilisant le signal numérique,
**caractérisé en ce que** l'étape de division est réalisée dans le domaine analogique.

# FIG.1

EP 2 101 425 B1

# FIG.2

# FIG.3

# FIG.4

# FIG.5

# FIG.6

# FIG.7

# FIG.8

FIG.9

# FIG.10

EP 2 101 425 B1

# FIG.11

# FIG.12

# FIG.13

EP 2 101 425 B1

# FIG.14

EP 2 101 425 B1

# FIG.15

EP 2 101 425 B1

1510

VARIABLE
INTERVAL
ADC

1.49

1   2.3   4   $|r(t)|^2$

1520

0.5   0.66   0.82   1   $\dfrac{1}{|r(t)|}$

# FIG.16

# FIG.17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Xiang Liu.** DSP-Enhanced Differential Direct-Detection for DQPSK and m-ary DPSK. *European Conference on Optical Communication (ECOC),* 2007, 7.2.1
- Optical Systems With High-Order DPSK and Star OAM Modulation Based on Interferometric Direct Detection. **Seimetz M et al.** Journal of Lightwave Technology. IEEE Service Center, 01 June 2007, vol. 25, 1515-1530

- **Wilamowski, B.M.** VLSI analog multiplier/divider circuit. *Industrial Electronics, 1998. Proceedings. ISIE '98. IEEE International Symposium,* 07 July 1998, vol. 2, 493-496